# EUROPEAN PATENT APPLICATION

(11) **EP 4 757 429 A1**
(43) Date of publication of application: **10.06.2026**
(21) Application number: 24850604.0
(22) Date of filing: 07.05.2024
(51) Int. Cl.: H04W 52/02, H04W 72/04

(54) **SIGNAL SENDING METHOD, SIGNAL RECEIVING METHOD, APPARATUSES AND STORAGE MEDIUM**

(30) Priority: 09.08.2023 CN 202311003226
(71) Applicant: ZTE Corporation, Shenzhen, Guangdong 518057 (CN)
(72) Inventor: YANG, Weiwei, Shenzhen, Guangdong 518057 (CN); DAI, Bo, Shenzhen, Guangdong 518057 (CN); CHEN, Mengzhu, Shenzhen, Guangdong 518057 (CN); LIU, Kun, Shenzhen, Guangdong 518057 (CN); HU, Youjun, Shenzhen, Guangdong 518057 (CN); GUO, Qiujin, Shenzhen, Guangdong 518057 (CN)
(74) Representative: Ziebig Hengelhaupt Intellectual Property Attorneys Patentanwaltskanzlei PartGmbB
(86) International application number: PCT/CN2024/091527
(87) International publication number: WO 2025/030949

(57) **Abstract**

Provided in the embodiments of the present disclosure are a signal sending method, a signal receiving method, apparatuses, and a storage medium. The signal sending method comprises: configuring a sending parameter; and, on the basis of the sending parameter, sending a wake-up signal.

## Description

The present disclosure claims priority to Chinese Patent Application No. 202311003226.2, filed on August 9, 2023, which is hereby incorporated by reference in its entirety.

### TECHNICAL FIELD

The present disclosure relates to the technical field of communications, and in particular, to a signal sending method, a signal receiving method, an apparatus and a storage medium.

### BACKGROUND

In order to meet the requirements of terminal battery life, the introduction of low-power consumption wake-up mechanism is proposed in related technologies. That is, a terminal uses a separate receiver to receive low-power consumption wake-up signals, and wakes up the main receiver through low-power consumption wake-up signals for data transmission and data reception. When the terminal does not detect a low-power consumption wake-up signal, the main receiver is in a deep sleep state, which may reduce the power consumption of the terminal.

### SUMMARY

In a first aspect, a signal sending method is provided, and the signal sending method includes: configuring a sending parameter; and sending a wake-up signal based on the sending parameter.

In the second aspect, a signal receiving method is provided, and the signal receiving method includes: acquiring a sending parameter; and receiving a wake-up signal based on the sending parameter.

In a third aspect, a communication apparatus is provided, and the communication apparatus includes: a processing unit, configured to configure a sending parameter; and a sending unit, configured to send a wake-up signal based on the sending parameter.

In a fourth aspect, a communication apparatus is provided, and the communication apparatus includes: a processing unit, configured to acquire a sending parameter; and a receiving unit, configured to receive a wake-up signal based on the sending parameter.

In a fifth aspect, a communication apparatus is provided, and the communication apparatus includes: a processor and a memory; where the memory stores instructions that are executable for the processor; the processor is configured to, upon executing the instructions, cause the communication apparatus to implement the method according to any one of the above-mentioned first aspect or the second aspect.

In a sixth aspect, a computer-readable storage medium is provided. The computer-readable storage medium stores computer instructions, the computer instructions, upon being run on a computer, cause the computer to perform the method according to any one of the above-mentioned first aspect or the second aspect.

In a seventh aspect, a computer program product including computer instructions is provided. In response that the computer instructions are run on a computer, the computer is caused to perform the method according to any one of the above-mentioned first aspect or the second aspect.

### BRIEF DESCRIPTION OF THE DRAWINGS

The accompanying drawings are used to provide a further understanding of technical solutions of the present disclosure, and are constituted as a part of the specification. The accompanying drawings are used to explain the technical solutions of the present disclosure together with the embodiments of the present disclosure, but do not constitute a limitation on the technical solutions of the present disclosure.
FIG. 1 is a structural schematic diagram of a communication system according to the embodiments of the present disclosure.
FIG. 2 is a flowchart of a signal sending method according to the embodiments of the present disclosure.
FIG. 3 is a flowchart of a signal receiving method according to the embodiments of the present disclosure.
FIG. 4 is a schematic diagram of composition of a communication apparatus according to the embodiments of the present disclosure.
FIG. 5 is a schematic diagram of composition of another communication apparatus according to the embodiments of the present disclosure.
FIG. 6 is a structural schematic diagram of a communication apparatus according to the embodiments of the present disclosure.

### DETAILED DESCRIPTION

The technical solutions in the embodiments of present disclosure will be described below clearly and completely in conjunction with the accompanying drawings. Obviously, the described embodiments are merely a part of embodiments of the present disclosure, but not all of embodiments. All other embodiments obtained based on the embodiments of the present disclosure by an ordinary person of those skilled in the art without paying any creative effort shall belong to the protection scope of the present disclosure.

Unless otherwise required by the context, throughout the specification and claims, a term "comprise/include" and variations thereof (such as a third person singular form "comprises/includes" and a present participle form "comprising/including") is interpreted as open and inclusive, which means "include, but not limited to."In the description of the specification, terms "one embodiment," "some embodiments," "exemplary embodiments," "example," "specific example," or "some examples" are intended to indicate that specific features, structures, materials, or characteristics related to the embodiment or example are included in at least one embodiment or example in the present disclosure. Schematic representations of the above terms do not necessarily refer to the same embodiment(s) or example(s). In addition, the described specific features, structures, materials, or characteristics may be included in any one or more embodiments or examples in any suitable manner.

Expressions such as "first" and "second" are used for descriptive purposes only, and are not to be understood as indicating or implying a relative importance or implicitly indicating a number of indicated technical features. Thus, features limited with wordings like "first" or "second," etc., may explicitly or implicitly include one or more of the feature(s). In the description of the present disclosure, unless otherwise specified, wordings "multiple", "a plurality of" or "the plurality of" mean a number of two or more than two.

In embodiments of the present disclosure, wordings, such as "exemplary/exemplarily" or "for example" and variations thereof, etc., are used to indicate examples, instances, or illustrations. Any embodiment or design solution described in the embodiments of the present disclosure with wordings such as "exemplary/exemplarily" or "for example" should not be illustrated as being more preferred or advantageous over other embodiments or design solutions. Specifically, the usage of the wordings such as "exemplary/exemplarily" or "for example" is intended to present related concepts in a concrete way.

In addition, the usage of the phrase "based on" is meant to be open and inclusive, since a process, step, calculation or other actions that are "based on" one or more of the described conditions or values may, in practice, be based on additional conditions or exceed those described values.

The network may send a paging message to a terminal (e.g., User Equipment (UE)) in an idle state or in a connected state. The paging process may be triggered by the core network to notify a certain UE to receive a paging request, or the paging process may be triggered by a base station to notify to update system information. The paging message is scheduled by a physical downlink control channel (PDCCH) scrambled by a radio network temporary identifier (RNTI), and is transmitted on the physical downlink shared channel (PDSCH). The terminal detects a corresponding PDCCH at a paging occasion (PO) to determine whether a PDSCH indicated by a PDCCH carries a paging message. If the terminal does not detect the corresponding PDCCH in a PO, it means that there is no paging message in that PO. At this time, the terminal switches into a sleep state without receiving data until the next PO for detection. This mode is referred to as discontinuous reception (DRX). That is to say, the terminal needs to perform blind detection for PDCCH in each PO, resulting in high power consumption of the terminal.

In order to reduce the power consumption of the terminal, wake-up signal (WUS) is introduced in related technologies, which means that a base station sends a signal indicating whether to perform PDCCH detection before each PO. The terminal first detects the WUS, and determines whether to detect the corresponding PDCCH based on a detection result of the WUS. For example, in a case where the WUS is detected, the terminal detects the PDCCH corresponding to the WUS, otherwise, the terminal does not detect the PDCCH. The introduction of WUS reduces the frequency of terminal to detect the PDCCH, thereby saving the power consumption of the terminal. In order to further reduce the power consumption of the terminal, low power wake-up signal (LP-WUS) has been proposed. The terminal uses a specific receiver/receiving module to receive a low power wake-up signal, thus to wake up the receiver for data transmission and data reception through the low power wake-up signal. In a case where the terminal does not detect a low power wake-up signal, the receiver is in a deep sleep state, and in this way, the power consumption of the terminal may further be reduced. However, the related technologies have not provided an implementation for how to send a low power wake-up signal.

Based on this, a signal sending method, a signal receiving method, an apparatus, and a storage medium are provided in the embodiments of the present disclosure. By configuring a sending parameter, then a wake-up signal is sent based on the sending parameter, that is, a method for sending a wake-up signal is provided, thus to reduce the power consumption of the terminal.

The solutions of the embodiments of the present disclosure may be introduced below in conjunction with the accompanying drawings.

The technical solutions provided in the embodiments of the present disclosure may be applied to various mobile communication networks, for example, new radio (NR) mobile communication networks using the 5th generation mobile communication technology (5G), future mobile communication networks, or multiple communication convergence systems, etc., which is not limited in the embodiments of the present disclosure.

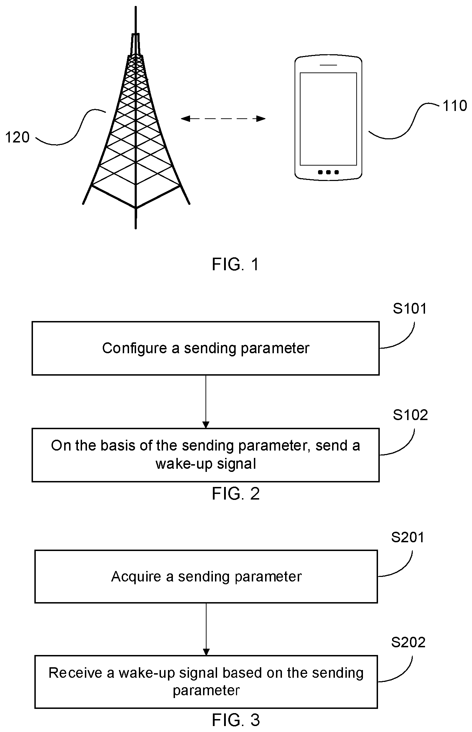

FIG. 1 shows a structural schematic diagram of a communication system according to the embodiments of the present disclosure. As shown in FIG. 1, the communication system includes, but not limited to a terminal 110 and a base station 120. Transmission, reception, and related interactions for wireless signals may be carried out between the terminal 110 and the base station 120.

In a wireless communication scenario, the terminal 110 communicates with the base station 120 through a wireless channel.

The terminal 110 may be a device with wireless transceiving functions (such as a mobile phone, a tablet, a wearable device, a vehicle-mounte device, a augmented reality (AR)/virtual reality (VR) device, a laptop, an ultra mobile personal computer (UMPC), a net-book, a personal digital assistant (PDA), etc.)A type of the terminal is not limited in the embodiments of the present disclosure.

The base station 120 may be any node of an evolution nodeB (eNB) a next generation nodeB (gNB), a transmission and reception point (TRP), a transmission point (TP), or some other accessing nodes. Based on a size of a provided service coverage area, the base station may further be classified into a macro base station for providing a macro cell, a pico base station for providing a pico cell, or a femto base station for providing a femto cell. With the continuous evolution of wireless communication technologies, a future base station may also adopts other names.

It should be understood that FIG. 1 is an exemplary structural diagram, and a number of devices included in the communication system shown in FIG. 1 is not limited, such as a number of base stations and a number of terminals are not limited. Furthermore, in addition to the devices shown in FIG. 1, the communication system shown in FIG. 1 may further include other devices, which is not limited thereto.

Next, as shown in FIG. 2, a signal sending method is provided in the embodiments of the present disclosure, and the signal sending method is applied to a base station, and the base station may be the base station 120 shown in above-mentioned FIG. 1. The method includes the following S101 and S102.

In S101, a sending parameter is configured.

In some embodiments, in a case where the base station needs to wake up the terminal for PDCCH detection, the base station configures the sending parameter.

In some embodiments, the sending parameter includes at least one of: an information type, a time domain position, a frequency domain position, a coding configuration, a frequency hopping configuration, an interleaving configuration, a mapping configuration, a first indication, a maximum load, a number of repetition, a waveform generation manner, a beam configuration, or an antenna configuration. The first indication is used to indicate whether a cyclic redundancy check (CRC) is added to the wake-up signal; and the information type is used to indicate information carried by the wake-up signal.

In some embodiments, the information carried by the wake-up signal comprises at least one of: an earthquake and tsunami warning system (ETWS), a commercial mobile alert service (CMAS), a system message change indication, a full wake-up indication, an indication for stopping wake-up signal detection, a group wake-up indication, a wake-up indication for at least one terminal to be paged, a tracking reference signal (TRS) transmission indication, or a cell index.

In some embodiments, the time domain position is used to indicate a time domain period and/or a time domain offset corresponding to the wake-up signal. A unit for the time domain period is one of the following: monitoring window, slot, second, millisecond; and the monitoring window is a duration during which the wake-up signal is capable of being sent. It should be understood that the time domain period corresponding to the wake-up signal is a time domain period in which the wake-up signal is sent;a time domain offset corresponding to the wake-up signal is the amount of time offset after the period starts/a fixed starting is initiated before sending the wake-up signal.

In some embodiments, the frequency domain position is used to indicate the subcarrier and/or frequency domain offset corresponding to the wake-up signal. It should be understood that the subcarrier corresponding to the wake-up signal is a subcarrier at which the wake-up signal starts is sent, or a subcarrier at which the wake-up signal ends to be sent; the frequency domain offset corresponding to the wake-up signal is the amount of offset after which the wake-up signal is sent from a starting subcarrier/ending subcarrier/fixed subcarrier.

In some embodiments, the coding configuration is used to indicate a coding manner and/or a bit rate corresponding to the wake-up signal. The coding manner comprises at least one of: Reed-Muller (RM) code, Polar code, repetition coding, Manchester coding, low-density parity check code, and the code rate is 1/Z, Z is a positive integer greater than or equal to 1.

In some embodiments, the frequency hopping configuration is used to indicate a second indication and/or a frequency hopping mode corresponding to the wake-up signal. The second indication is used to indicate whether frequency hopping corresponding to the wake-up signal is enabled, that is, used to indicate whether the corresponding frequency hopping is enabled upon sending the wake-up signal. If frequency hopping is enabled, the frequency hopping mode may be preset. The frequency hopping mode includes a frequency hopping granularity and a frequency hopping position, the frequency hopping granularity includes K1 symbols, K1 is a positive integer greater than or equal to 1, and the frequency hopping position includes K2 frequency domain positions, K2 is a positive integer greater than or equal to 2. For example, K2 is equal to 2, that is, the frequency hopping position includes 2 frequency domain positions. As another example, K2 is equal to 4, taht is the frequency hopping position includes 4 frequency domain positions, etc.

As an example, the frequency hopping corresponding to the wake-up signal is configured to be enabled only when the coding manner corresponding to the wake-up signal is Manchester coding with a bit rate less than 1/2. In other words, the frequency hopping corresponding to the wake-up signal is configured to be enabled only when the coding manner corresponding to the wake-up signal is Manchester coding with a bit rate less than 1/2. It should be understood that based on the above configuration, the frequency hopping gain may only be obtained for the wake-up signal during transmission.

As an example, in a case where the coding manner corresponding to the wake-up signal is configured as Manchester coding with a bit rate of 1/4, and a number of information bits carried on a time domain symbol is 2 upon sending, a value of K1 is configured as 1, that is, the frequency hopping granularity is 1 time domain symbol. It should be understood that based on the above configuration, the frequency hopping gain may only be obtained for the wake-up signal during transmission.

As another example, in a case where a preset condition is met, K1 is configured to be a value obtained from 2 multiplying an information load to be sent and divided by a number of information bits carried on a time domain symbol upon sending. That is, in a case where the preset condition is met, K1=2*the information load to be sent/the number of information bits carried on one time domain symbol upon sending.

The preset condition is any one of the following: the coding manner corresponding to the wake-up signal being Manchester coding with a bit rate of 1/2 and repetition coding; the coding manner corresponding to the wake-up signal being Manchester coding with a bit rate of 1/2 and the number of repetition being greater than 1. It should be understood that, in a case where the preset condition is met, the K1 is configured in above-mentioned ways, only in this way, the frequency hopping gain may be obtained for the wake-up signal during transmission.

In some embodiments, the interleaving configuration is used to indicate a third indication and/or an interleaving mode corresponding to the wake-up signal, that is, used to indicate the corresponding third indication and/or the interleaving mode upon sending the wake-up signal. The third indication is used to indicate whether interleaving corresponding to the wake-up signal is enabled, and the interleaving mode is a predefined mode. For example, the base station inputs coded data into a predefined matrix in a row-major order, and then outputs it in a column-major order, and vice versa, which will not be repeated herein.

In some embodiments, the maximum load is used to indicate a corresponding maximum load upon sending the wake-up signal, that is, used to indicate a maximum value of the corresponding load upon sending the wake-up signal.

In some embodiments, the mapping configuration is used to indicate a mapping mode corresponding to the wake-up signal, that is, used to indicate the corresponding mapping mode upon sending the wake-up signal. The mapping mode includes at least one of: a discontinuous frequency domain mapping, or a continuous frequency domain mapping.

In some embodiments, the number of repetitions is used to indicate a corresponding number of repetitions upon sending the wake-up signal.

In some embodiments, the waveform generation manner includes at least one of: amplitude shift keying (ASK), binary on-off keying (OOK), frequency shift keying (FSK), and orthogonal frequency division multiplexing (OFDM).

In some embodiments, the beam configuration is used to indicate a corresponding beam direction upon sending the wake-up signal, and a number of the beam direction may be one or more.

In some embodiments, the antenna configuration is used to indicate a corresponding multi antenna transmission mode upon sending the wake-up signal, and the multi antenna transmission mode includes one of the following: open-loop precoding, closed-loop precoding, transmission diversity, and antenna selection. That is, upon sending the wake-up signal, one of the following manner is used: open-loop precoding, closed-loop precoding, transmission diversity, or antenna selection.

As an example, configuring the sending parameter may be configuring the sending parameter based on a first set.

The first set includes at least one of: an information set composed of pieces of information carried by the wake-up signal, a resource set composed of resource positions corresponding to the wake-up signal upon sending, a load set composed of load sizes corresponding to the wake-up signal, and a format set composed of formats corresponding to the wake-up signal upon sending.

The composition of the first set is illustrated below by examples.

Example 1: The first set includes the above-mentioned information set.

In some embodiments, in a case where the first set includes the above-mentioned information set, the first set may include any one of the following information set 1-information set 4.

The information set 1 includes first information and second information, that is, the pieces of the information carried by the wake-up signal includes the first information and the second information.

The first information includes at least one of: the earthquake and tsunami warning system, the commercial mobile alert service, the system message change indication, the full wake-up indication, the indication for stopping wake-up signal detection, the tracking reference signal transmission indication, or the cell index.

The second information includes at least one of: a group wake-up indication, or a wake-up indication for at least one terminal to be paged. The wake-up indication for at least one terminal to be paged may also be referred to as a wake-up indication for at least one terminal that needs to be paged.

The information set 2 includes the first information, the second information, and third information, that is, the pieces of the information carried by the wake-up signal includes the first information, the second information, and the third information.

The first information includes at least one of: the earthquake and tsunami warning system, the commercial mobile alert service, the system message change indication, or the cell index.

The second information includes at least one of: the indication for stopping wake-up signal detection, the tracking reference signal transmission indication.

The third information includes at least one of: a wake-up indication, and a wake-up indication for at least one terminal to be paged.

The information set 3 includes the first information, the second information, and the third information, that is, the pieces of the information carried by the wake-up signal includes the first information, the second information, and the third information.

The first information includes at least one of: the earthquake and tsunami warning system, the commercial mobile alert service, the system message change indication, the full wake-up indication, the indication for stopping wake-up signal detection, the tracking reference signal transmission indication, or the cell index.

The second information includes a group wake-up indication.

The third information includes a wake-up indication for at least one terminal to be paged.

The information set 4 includes the first information, the second information, the third information, and the fourth information, that is, the pieces of the information carried by the wake-up signal includes the first information, the second information, the third information, and the fourth information.

The first information includes at least one of: the earthquake and tsunami warning system the system message change indication, the commercial mobile alert service, or the cell index.

The second information includes at least one of: the full wake-up indication, the indication for stopping wake-up signal detection, or the tracking reference signal transmission indication.

The third information includes a group wake-up indication.

The fourth information includes a wake-up indication for at least one terminal to be paged.

Example 2: The first set includes the above-mentioned resource set.

In some embodiments, in a case where the first set includes the above-mentioned resource set, the first set includes F preset resource positions. F is a positive integer greater than or equal to 1, and a resource position includes both a time domain position and a frequency domain position.

For example, the resource set may be any one of the following resource set 1 to resource set 5.

The resource set 1 includes a first resource position (a time domain position 1) and a second resource position (a time domain position 2), that is, a corresponding resource position upon sending the wake-up signal includes the first resource position and the second resource position.

The resource set 2 includes the first resource position (the time domain position 1), that is, a corresponding resource position upon sending the wake-up signal includes the first resource position.

The resource set 3 includes a first resource position (the time domain position 1, a frequency domain position 1) and a second resource position (the time domain position 2, a frequency domain position 2), that is, a corresponding resource position upon sending the wake-up signal includes the first resource position and the second resource position.

The resource set 2 includes the first resource position (the time domain position 1, the frequency domain position 1), that is, a corresponding resource position upon sending the wake-up signal includes the first resource position.

The resource set 5 includes a first resource (a frequency domain position 1) and a second resource position (a frequency domain position 2), that is, a corresponding resource position upon sending the wake-up signal includes the first resource position and the second resource position.

Example 3: The first set includes the above-mentioned load set.

In some embodiments, in a case where the first set includes the above-mentioned load set, as an example, the first set may include either load set 1 or load set 2 as described below.

The load set 1 includes a first load and a second load, that is, the corresponding load sizes upon sending the wake-up signal include the first load and the second load.

The first load is a load less than or equal to L1, and the second load is a load greater than L1 but less than or equal to L2.

The load set 2 includes the first load, the second load, and a third load, that is, the corresponding load sizes upon sending the wake-up signal include the first load, the second load, and the third load.

The first load is a load less than or equal to L1, the second load is a load greater than L1 and less than or equal to L2, and the third load is a load greater than L2 and less than or equal to L3. L1, L2, and L3 are all positive integers greater than or equal to 1, and L1 is less than L2 and L2 is less than L3.

Example 4: The first set includes the above-mentioned format set.

In some embodiments, in a case where the first set includes the above-mentioned format set, the first set is composed of G sending formats. First sending parameters corresponding to respective sending formats are preset and/or fixed, and G is a positive integer greater than or equal to 1. A first sending parameter is a subset of the sending parameter.

In 102, a wake-up signal is sent based on the sending parameter.

The wake-up signal is used to wake up the terminal for PDCCH detection.

In some embodiments, the wake-up signal may be a low power wake-up signal.

Based on the embodiments shown in FIG. 2, the base station obtains the frequency hopping gain by configuring the sending parameter and configuring the frequency hopping corresponding to the wake-up signal to be enabled in response to that the coding manner corresponding to the wake-up signal is Manchester coding with a bit rate being less than 1/2, or configuring a value of K1 is configured as 1 in response to configuring the coding manner corresponding to the wake-up signal as Manchester coding with a bit rate of 1/2, and a number of information bits carried on a time domain symbol as 2 upon sending, or configuring K1 to be a value obtained from 2 multiplying an information load to be sent and divided by a number of information bits carried on a time domain symbol upon sending in response to that a preset condition is met, then the wake-up signal is sent based on the sending parameter, to provide a method of sending a wake-up signal suitable for a standalone receiver/receiving module, enabling the terminal to perform PDCCH detection at the appropriate time, thereby reducing the power consumption of the terminal.

In some embodiments, as shown in FIG. 3, the present disclosure provides a signal receiving method, and the signal receiving method is applied to a terminal, and the terminal may be the terminal 110 shown in FIG. 1 above. The method includes the following S201 and S202.

In S201, a sending parameter is acquired.

The sending parameter may be predefined or configured by the base station. That is to say, acquiring the sending parameter may be either acquiring a predefined sending parameter or receiving a sending parameter configured by the base station.

In some embodiments, acquiring the sending parameter includes at least one of: acquiring a sending parameter corresponding to one or more pieces of information in an information set composed of pieces of information carried by the wake-up signal; acquiring a sending parameter corresponding to one or more resources in a resource set composed of resource positions corresponding to the wake-up signal upon sending; acquiring a sending parameter corresponding to one or more loads in a load set composed of load sizes corresponding to the wake-up signal; or acquiring a sending parameter corresponding to one or more formats in a format set composed of formats corresponding to the wake-up signal transmission. The corresponding descriptions for the information set, resource set, load set, and format set may refer to the relevant descriptions in S101 above, and will not be repeated herein.

In S202, a wake-up signal is received based on the transmission parameter.

The wake-up signal may be a low power wake-up signal. The sending parameter includes at least one of: an information type, a time domain position, a frequency domain position, a coding configuration, a frequency hopping configuration, an interleaving configuration, a mapping configuration, a first indication, a maximum load, a number of repetition, a waveform generation manner, a beam configuration, or an antenna configuration. The first indication is used to indicate whether a CRC is added to the wake-up signal; and the information type is used to indicate information carried by the wake-up signal. The description for the contents included in the sending parameter may refer to the corresponding description in the above 102, which will not be repeated herein.

Based on the embodiment shown in FIG. 3, in the embodiments of the present disclosure, the terminal receives the wake-up signal based on the sending parameter, so that the terminal may perform PDCCH detection at the appropriate time, thereby reducing the power consumption of the terminal.

A are illustrated below to a signal sending method and a signal receiving method provided in the embodiments of the present disclosure are illustrated below in combination with serveral examples.

As an example, taking a first set as an information set composed of pieces of information carried by the wake-up signal, and taking the information set 1 as an example, the following examples A1 to A14 may be included.

### Example A1

From the above description of information set 1, it can be seen that the information set 1 includes first information and second information. Assuming that the base station configures the sending parameters for the first information as: a time domain position being each monitoring window, coding manner being RM with a bit rate of 1/4, and a waveform generation manner being OOK; and the base station configures sending parameters corresponding to the second information as: a time domain position being every 2 monitoring windows, the first indication being used to indicate to add 8-bit CRC, and a waveform generation manner being OOK.

Assuming that a system message change indication needs to be sent.

The base station may correspond the system message change indication to a position 1. Assuming the first information is 4 bits, the positions of respective pieces of information are determined in the first information in a sequence of an earthquake and tsunami warning system, a commercial mobile alert service, a system message change indication, a full wake-up indication, and an indication for stopping wake-up signal detection. It can be seen that an order of the system message change indication in the first information is a second position, which corrsponds to the position 1, that is, the first information is 0100, and the first information is encoded with RM with a bit rate of 1/4, and then is sent with OOK. Since the first information may be sent in every monitoring window, the base station may choose the nearest monitoring window for sending.

The terminal determines that the first information needs to be monitored within each monitoring window according to the sending parameter, and determines that the second information needs to be monitored every two monitoring windows. The first information is encoded by using the RM coding with a bit rate of 1/4, and the second information is added with CRC. Therefore, the terminal monitors the LP-WUS according to the sending parameter, and in a case where the first information is monitored, the terminal performs receiption for the system message.

### Example A2

Assuming that the base station configures the sending parameters corresponding to the first information as: a time domain position being each monitoring window, coding manner being RM with a bit rate of 1/4, and a waveform generation manner being OOK; and the base station configures sending parameters corresponding to the second information as: a time domain position being every 2 monitoring windows, the first indication being used to indicate to add 8-bit CRC, and a waveform generation manner being OOK.

Assuming that a system message change indication needs to be sent.

The base station determines that the first information is 1 since the first information is assumed as 1 bit, and as long as any of earthquake and tsunami warning system, commercial mobile alert service, system message change indication, full wake-up indication, or the indication for stopping wake-up signal detection needs to be sent, the first information is set to 1, and the first information is sent after a RM coding with a bit rate of 1/4 is performed. Since the first information may be sent in every monitoring window, the base station may choose the nearest monitoring window for sending.

The terminal determines that the first information needs to be monitored within each monitoring window according to the sending parameter, and determines that the second information needs to be monitored every two monitoring windows. The first information is encoded by using the RM with a bit rate of 1/4, and CRC is used for the second information. Therefore, the terminal monitors the LP-WUS according to the sending parameter, in a case where the first information being 1 is monitored, the terminal performs receiption for data.

### Example A3

Assuming that the base station configures the sending parameters corresponding to the first information as: a time domain position being each monitoring window, coding manner being RM and Manchester coding with a bit rate of 1/2 for RM and a bit rate of 1/2 for Manchester coding, respectively, and a waveform generation manner being OOK; and the base station configures sending parameters corresponding to the second information as: a time domain position being every 2 monitoring windows, the first indication being used to indicate to add 8-bit CRC, and a waveform generation manner being OOK.

Assuming that a system message change indication needs to be sent.

The base station determines that the first information is 1 since the first information is assumed as 1 bit, and as long as any of earthquake and tsunami warning system, commercial mobile alert service, system message change indication, full wake-up indication, or the indication for stopping wake-up signal detection needs to be sent, the first message is set to 1, and the first information is sent after the RM coding with a bit rate of 1/2 and Manchester coding with a bit rate of 1/2 are performed. Since the first information may be sent in every monitoring window, the base station may choose the nearest monitoring window for sending.

The terminal determines that the first information needs to be monitored within each monitoring window according to the sending parameter, and determines that the second information needs to be monitored every two monitoring windows. The first information is encoded by using the RM with a bit rate of 1/2 and Manchester coding with a bit rate of 1/2, and CRC is used for the second information. Therefore, the terminal monitors the LP-WUS according to the sending parameter, and in a case where the first information being 1 is monitored, the terminal performs receiption for data.

### Example A4

Assuming that the base station configures the sending parameters corresponding to the first information as: a time domain position being each monitoring window, coding manner being RM and Manchester coding with a bit rate of 1/2 for RM and a bit rate of 1/2 for Manchester coding, respectively, the first indication being used to indicate to add 8-bit CRC, and a waveform generation manner being OOK; and the base station configures sending parameters corresponding to the second information as: a time domain position being every 2 monitoring windows, the first indication being used to indicate to add 8-bit CRC, and a waveform generation manner being OOK.

Assuming that a system message change indication needs to be sent.

The base station determines that the first information is 1 since the first information is assumed as 1 bit, and as long as any of earthquake and tsunami warning system, commercial mobile alert service, system message change indication, full wake-up indication, or the indication for stopping wake-up signal detection needs to be sent, the first information is set to 1, and the first information is sent after 8 bits are added, and then a RM coding with a bit rate of 1/2 and the Manchester coding with a bit rate of 1/2 are performed. Since the first information may be sent in every monitoring window, the base station may choose the nearest monitoring window for sending.

The terminal determines that the first information needs to be monitored within each monitoring window according to the sending parameter, and determines that the second information needs to be monitored every two monitoring windows. The 8-bit CRC is used for the first information, and the coding manner for the first information includes the RM with a bit rate of 1/2 and Manchester coding with a bit rate of 1/2, and CRC is used for the second information. Therefore, the terminal monitors the LP-WUS according to the sending parameter, and in a case where the first information being 1 is monitored, the terminal performs receiption for data.

### Example A5

Assuming that the base station configures the sending parameters corresponding to the first information as: a time domain position being each monitoring window, coding manner being RM and Manchester coding with a bit rate of 1/2 for RM and a bit rate of 1/2 for Manchester coding, respectively, the first indication being used to indicate to add 8-bit CRC, the third indication being used to indicate to enable interleaving corresponding to the wake-up signal, and a waveform generation manner being OOK; and the base station configures sending parameters corresponding to the second information as: a time domain position being every 2 monitoring windows, the first indication being used to indicate to add 8-bit CRC, and a waveform generation manner being OOK.

Assuming that a system message change indication needs to be sent.

The base station determines that the first information is 1 since the first information is assumed as 1 bit, and as long as any of earthquake and tsunami warning system, commercial mobile alert service, system message change indication, full wake-up indication, or the indication for stopping wake-up signal detection needs to be sent, the first message is set to 1, and the first information is sent after 8-bit CRC is added, then the RM coding with a bit rate of 1/2 and Manchester coding with a bit rate of 1/2 are performed, and finally the interleaving is performed. A process of interleaving is to input encoded information into a matrix in a row-major order, and then output data in a column-major order. A matrix size may be preset, and since the first information may be sent in every monitoring window, the base station may choose the nearest monitoring window for sending.

The terminal determines that the first information needs to be monitored within each monitoring window according to the sending parameter, and determines that the second information needs to be monitored every two monitoring windows. The 8-bit CRC, the RM with a bit rate of 1/2 and Manchester coding with a bit rate of 1/2 are used for the first information, and CRC is used for the second information with the interleaving is enabled. Therefore, the terminal monitors the LP-WUS according to the sending parameter, and in a case where the first information being 1 is monitored, the terminal performs receiption for data.

### Example A6

Assuming that the base station configures the sending parameters corresponding to the first information as: a time domain position being each monitoring window, coding manner being RM and Manchester coding with a bit rate of 1/2 for RM and a bit rate of 1/2 for Manchester coding, respectively, the first indication being used to indicate to add 8-bit CRC, the third indication being used to indicate to enable interleaving corresponding to the wake-up signal, a waveform generation manner being OOK, and the second indication being used to indicate to enable the frequency hopping corresponding to the wake-up signal with a frequency hopping granularity of 1 symbol and a frequency hopping position being preset 4 frequency domain positions; and the base station configures sending parameters corresponding to the second information as: a time domain position being every 2 monitoring windows, the first indication being used to indicate to add 8-bit CRC, and a waveform generation manner being OOK.

Assuming that a system message change indication needs to be sent.

The base station determines that the first information is 1 since the first information is assumed as 1 bit, and as long as any of earthquake and tsunami warning system, commercial mobile alert service, system message change indication, full wake-up indication, or the indication for stopping wake-up signal detection needs to be sent, the first message is set to 1, and the first information is sent after 8-bit CRC is added, then the RM coding with a bit rate of 1/2 and Manchester coding with a bit rate of 1/2 are performed, and finally the interleaving is performed. Upon sending, the first information is mapped to the preset 4 frequency domain positions in sequence based on the 1 symbol, and since the first information may be sent in every monitoring window, the base station may choose the nearest monitoring window for sending.

The terminal determines that the first information needs to be monitored within each monitoring window according to the sending parameter, and determines that the second information needs to be monitored every two monitoring windows. The 8-bit CRC, the RM with a bit rate of 1/2 and Manchester coding with a bit rate of 1/2 are used for the first information, and CRC is used for the second information with the interleaving and frequency hopping are enabled. Therefore, the terminal monitors the LP-WUS based on the sending parameter, and in a case where the first information being 1 is monitored, the terminal performs receiption for data.

### Example A7

Assuming that the base station configures the sending parameters corresponding to the first information as: a time domain position being each monitoring window, coding manner being RM with a bit rate of 1/4, and a waveform generation manner being OOK; and the base station configures sending parameters corresponding to the second information as: a time domain position being every 2 monitoring windows, the first indication being used to indicate to add 8-bit CRC, and a maximum load being 8 bits, and a waveform generation manner being OOK.

Assuming that a terminal with a group index 3 needs to be awakened.

The base station determines to send the second information. Since the group index is assumed as being mapped in bits, the base station adds an 8-bit CRC to "00100000", and then sends it.

The terminal determines that the first information needs to be monitored within each monitoring window according to the sending parameter, and determines that the second information needs to be monitored every two monitoring windows. The RM with a bit rate of 1/4 is used for the first information, and the 8-bit CRC is used for the second information with the maximum load of 8 bits. Therefore, the terminal monitors the LP-WUS according to the sending parameters, and then the second information is monitored, then assuming that the group index corresponding to the terminal is 3, then the terminal monitors a paging message.

### Example A8

Assuming that the base station configures the sending parameters corresponding to the first information as: a time domain position being each monitoring window, coding manner being RM with a bit rate of 1/4, and a waveform generation manner being OOK; and the base station configures sending parameters corresponding to the second information as: a time domain position being every 2 monitoring windows, the first indication being used to indicate to add 8-bit CRC, and a maximum load being 6 bits, and a waveform generation manner being OOK.

Assuming that all terminals with group indices 3 and 7 need to be awakened.

The base station determines to send the second information. Since the group index is assumed as being mapped in a manner corresponding to binary, the base station adds an 8-bit CRC to "011111", and then sends it.

The terminal determines that the first information needs to be monitored within each monitoring window according to the sending parameter, and determines that the second information needs to be monitored every two monitoring windows. The RM with a bit rate of 1/4 is used for the first information, and the 8-bit CRC is used for the second information with the maximum load of 6 bits. Therefore, the terminal monitors the LP-WUS according to the sending parameters, and then the second information is monitored, then assuming that the group index corresponding to the terminal is 3, then the terminal monitors a paging message.

### Example A9

Assuming that the base station configures the sending parameters corresponding to the first information as: a time domain position being each monitoring window, coding manner being Polar with a bit rate of 1/4, and a waveform generation manner being OOK; and the base station configures sending parameters corresponding to the second information as: a time domain position being every 2 monitoring windows, the first indication being used to indicate to add 8-bit CRC, and a maximum load being 6 bits, and a waveform generation manner being OOK.

Assuming that the base station needs to wake all terminals with group indices 2, 3, and 7 up.

The base station determines to send the second information. Since the group index is assumed as being mapped in a manner corresponding to binary with a maximum load of 6 bits, only 2 group indexes is capable of being sent, and an 8-bit CRC is added to "010011", and then is sent.

The terminal determines that the first information needs to be monitored within each monitoring window according to the sending parameter, and determines that the second information needs to be monitored every two monitoring windows. The Polar with a bit rate of 1/4 is used for the first information, and the 8-bit CRC is used for the second information with the maximum load of 6 bits. Therefore, the terminal monitors the LP-WUS according to the sending parameters, and then the second information is monitored, then assuming the group index corresponding to the terminal is 3, then the terminal monitors a paging message.

### Example A10

Assuming that the base station configures the sending parameters corresponding to the first information as: a time domain position being each monitoring window, a coding manner being RM with a bit rate of 1/4, and a waveform generation manner being OOK; and the base station configures sending parameters corresponding to the second information as: a time domain position being every 2 monitoring windows, a coding manner being Manchester coding with a bit rate of 1/2, the first indication being used to indicate to add 8-bit CRC, and a maximum load being 9 bits, and a waveform generation manner being OOK.

Assuming that terminals with group indices 2, 3, and 7 are needed to be awakened.

The base station determines to send the second information. Since the maximum load is 9 bits, only three group indexes are capable of being sent. The 8-bit CRC is added to "010011111", and then the Manchester coding is performed before sending.

The terminal determines to monitor the first information in each monitoring window according to the sending parameters, and monitor the second information every two monitoring windows. The RM with a bit rate of 1/4 is used for the first information, the 8-bit CRC is used for the second information with the maximum load of 9 bits, and Manchester coding with a bit rate of 1/2 is further used for the second information. Therefore, the terminal monitors the LP-WUS according to the sending parameters, and then the second information is monitored.

Assuming the group index corresponding to the terminal is 3, the terminal may monitor the paging message.

### Example A11

Assuming that the base station configures the sending parameters corresponding to the first information as: a time domain position being each monitoring window, coding manner being RM with a bit rate of 1/4, and a waveform generation manner being OFDM; and the base station configures sending parameters corresponding to the second information as: a time domain position being every 2 monitoring windows, the first indication being used to indicate to add 8-bit CRC, and a maximum load being 40 bits, and a waveform generation manner being OOK.

Assuming that terminal A and terminal B need to be awakened, the corresponding terminal index is 16 bits, and assuming that terminal A is 1001000111110000 and terminal B is 1001000000001111.

The base station determines to send the second message. Since the second information includes the group index and terminal index with a maximum load of 40 bits, the second information may carry wake-up instructions for up to 2 terminals. The 40-bit second information is 0000000010010001111100001001000000001111, which is then sent with adding an 8-bit CRC.

The terminal A determines that the first information needs to be monitored in each monitoring window according to the sending parameters, and the second information needs to be monitored every two monitoring windows. The RM with a bit rate of 1/4 is used for the first information, and the 8-bit CRC is used for the second information with a maximum load of 40 bits. Therefore, the terminal A monitors the LP-WUS according to the sending parameters and monitors the second information. The terminal A then monitors its own index in the second information, and monitors the paging message.

The terminal B determines that the first information needs to be monitored in each monitoring window according to the sending parameters, and the second information needs to be monitored every two monitoring windows. The RM with a bit rate of 1/4 is used for the first information, and the 8-bit CRC is used for the second information with a maximum load of 40 bits. Therefore, the terminal B monitors the LP-WUS according to the sending parameters and monitors the second information. The terminal B then monitors its own index in the second information, and monitors the paging message.

### Example A12

Assuming that the base station configures the sending parameters corresponding to the first information as: a time domain position being each monitoring window, coding manner being RM with a bit rate of 1/4, and a waveform generation manner being OFDM; and the base station configures sending parameters corresponding to the second information as: a time domain position being every 2 monitoring windows, the first indication being used to indicate to add 8-bit CRC, and a maximum load being 24 bits, and a waveform generation manner being OOK.

Assuming that terminal A and terminal B need to be awakened, the corresponding terminal index is 16 bits, and assuming that terminal A is 1001000111110000 and terminal B is 1001000000001111.

The base station determines to send the second information. Since the second information includes the group index and the terminal index with a maximum load of 24 bits. Therefore, the second information may carry up to a wake-up indication for one terminal. Assuming there are 8 groups, the second information is 000000001001000111110000, which is sent in monitoring window n after adding an 8-bit CRC. The second information may also be 0000001001000000001111, which is sent in monitoring window n+2 after adding an 8-bit CRC.

The terminal A determines that the first information needs to be monitored in each monitoring window according to the sending parameters, and the second information needs to be monitored every two monitoring windows. The RM with a bit rate of 1/4 is used for the first information, and the 8-bit CRC is used for the second information with a maximum load of 24 bits. Therefore, the terminal A monitors the LP-WUS according to the sending parameters, and monitors the second information in a monitoring window n. The terminal A then monitors its own index in the second information, and monitors the paging message.

The terminal B determines that the first information needs to be monitored in each monitoring window according to the sending parameters, and the second information needs to be monitored every two monitoring windows. The RM with a bit rate of 1/4 is used for the first information, and the 8-bit CRC is used for the second information with a maximum load of 24 bits. Therefore, the terminal B monitors the LP-WUS according to the sending parameters, and monitors the second information in a monitoring window n. If the second information does not monitor its own index in the second information in the monitoring window n, the terminal B continues to monitor the LP-WUS. If the terminal B monitors the second information in the monitoring window n+2, and the monitored second information include its own index, then the terminal B monitors the paging message.

### Example A13

Assume that the base station configures the sending parameters corresponding to the first information as: a time domain position being each monitoring window, a coding manner being Manchester coding with a bit rate of 1/4, and a first OOK being adopt for sending, and the frequency hopping being enabled; and configures the sending parameters corresponding to the second information as: a time domain position being every two monitoring windows, a coding manner being Manchester coding with a bit rate of 1/4, the first indication being used to indicate to add 8-bit CRC, a maximum load being 10 bits, and a first OOK being adopt for sending, and the frequency hopping being enabled. The first OOK is an OOK that carries 2 bits of information on a time domain symbol, with a frequency hopping mode of two predefined frequency domain positions.

Assuming that terminals with group indices 2, 3, and 7 are needed to be awakened.

The base station determines to send the second information. Since the maximum load is 10 bits, three group indexes may be sent. "010011111" is added with 1-bit 0 first, and then added the 8-bit CRC, then the Manchester coding with a bit rate of 1/4 is performed before sending. Upon sending, the frequency hopping is enabled. Since the bit rate of the Manchester coding is 1/4, and one OOK time domain symbol carries 2 bits of information, K1=1, that is, frequency hopping transmission is performed based on each time domain symbol.

The terminal determines that the first information needs to be monitored in each monitoring window according to the sending parameters, and the second information needs to be monitored every two monitoring windows. The Manchester coding with a bit rate of 1/4 is used for the first information, and the 8-bit CRC is used for the second information with a maximum load of 10 bits, and the Manchester coding with a bit rate of 1/4 is further used. Therefore, the terminal monitors the LP-WUS according to the sending parameters and monitors the second information.

Assuming the group index corresponding to the terminal is 3, the terminal may monitor the paging message.

### Example A14

Assume that the base station configures the sending parameters corresponding to the first information as: a time domain position being each monitoring window, a coding manner being Manchester coding with a bit rate of 1/4, and a first OOK being adopt for sending, and the frequency hopping being enabled; and configures the sending parameters corresponding to the second information as: a time domain position being every two monitoring windows, coding manners being Manchester coding with a bit rate of 1/2 and repetition coding with a bit rate of 1/2, the first indication being used to indicate to add 8-bit CRC, a maximum load being 10 bits, and a first OOK being adopt for sending, and the frequency hopping being enabled. The first OOK is an OOK that carries 2 bits of information on a time domain symbol, with a frequency hopping mode of two predefined frequency domain positions.

Assuming that terminals with group indices 2, 3, and 7 are needed to be awakened.

The base station determines to send the second information. Since the maximum load is 10 bits, only three group indexes are capable of being sent. "010011111" is added with 1-bit 0 first, and then added the 8-bit CRC, then the Manchester coding is performed before sending. Upon sending, the frequency hopping is enabled. Since the Manchester coding with the bit rate of 1/2 and the repetition coding with the bit rate of 1/2 are used, and one OOK time domain symbol carries 2 bits of information, then K1=2* (10+8) /2=18, that is, frequency hopping transmission is performed based on 18 time domain symbols.

The terminal determines that the first information needs to be monitored in each monitoring window according to the sending parameters, and the second information needs to be monitored every two monitoring windows. The Manchester coding with a bit rate of 1/4 is used for the first information, and the 8-bit CRC is used for the second information with a maximum load of 10 bits, and the Manchester coding with the bit rate of 1/2 and the repetition coding with the bit rate of 1/2 are further used. Therefore, the terminal monitors the LP-WUS according to the sending parameters, and then the second information is monitored.

Assuming the group index corresponding to the terminal is 3, the terminal may monitor the paging message.

As another example, taking the first set as a resource set composed of corresponding resource positions upon sending the wake-up signal, the following examples B1 to B4 may be included.

### Example B1

Taking the resource set being the above-mentioned resource set 1 as an example, it can be seen from the above contents that the resource set 1 includes a first resource position (time domain position 1) and a second resource position (time domain position 2). Assuming that the base station configures the sending parameters corresponding to the first resource position as: information types including an earthquake and tsunami warning system, a commercial mobile alert service, a system message change indication, a full wake-up indication, an indication for stopping wake-up signal detection, a coding manner being RM with a bit rate of 1/4, and a waveform generation manner being OOK; and configures sending parameters corresponding to the second resource position as: an information type being group wake-up indication, the first indication being used to indicate to add a 8-bit CRC, a mapping mode being noncontinuous mapping, and a waveform generation manner being OOK.

Assuming that a system message change indication needs to be sent.

The base station corresponds the system message change indication to position 1, that is, the information carried on the domain resource 1 is 0100 (positions of the respective pieces of information are determined in a sequence according to the information type including an earthquake and tsunami warning system, a commercial mobile alert service, a system message change indication, a full wake-up indication, an indication for stopping wake-up signal detection). After the RM coding with a bit rate of 1/4 is performed, the low power wake-up signal may be sent on the first resource position.

The terminal monitors the LP-WUS at each resource position according to the sending parameters, that is, monitors the earthquake and tsunami warning system, the commercial mobile alert service, the system message change indication, the full wake-up indication, the indication for stopping wake-up signal detection at time domain position 1 with using the RM with a bit rate of 1/4. The group wake-up indication is monitored on the time domain position 2, and CRC is used for the second information. The terminal monitors the LP-WUS according to the sending parameters, and then information of system message change indication is monitored. Then, the terminal performs receiption for the system message.

### Example B2

Taking the resource set being the above-mentioned resource set 2 as an example, it can be seen from the above contents that the resource set 2 includes a first resource position (time domain position 1). Assuming that the base station configures the sending parameters corresponding to the first resource position as: information types being an earthquake and tsunami warning system, a commercial mobile alert service, a system message change indication, an indication for stopping wake-up signal detection and a group wake-up indication, a coding manner being Manchester coding with a bit rate of 1/4, and a waveform generation manner being OOK.

Assuming that all terminals with group index 3 need to be awakened.

Since the group wake-up indication information is sent in a bit mapping manner, that is, mapping is performed in a sequence of the earthquake and tsunami warning system, the commercial mobile alert service, the system message change indication, the indication for stopping wake-up signal detection and the group wake-up indication. Lengths of the earthquake and tsunami warning system, the commercial mobile alert service, the system message change indication, the indication for stopping wake-up signal detection are 1 bit. Assuming a total number of groups is 8, a length of the group index is 3 bits. In this way, the base station encodes "000011" in Manchester coding with a bit rate of 1/4 and sends it on the first resource position.

The terminal monitors the LP-WUS at each resource position according to the sending parameters, that is, monitors the earthquake and tsunami warning system, the commercial mobile alert service, the system message change indication, the indication for stopping wake-up signal detection and the group wake-up indication at time domain position 1, and assuming the group index corresponding to the terminal is 3, the terminal monitors a paging message.

### Example B3

Taking the resource set being the above-mentioned resource set 3 as an example, it can be seen from the above contents that the resource set 3 includes a first resource position (time domain position 1, and frequency domain position 1) and a second resource position (time domain position 2, and frequency domain position 2). Assuming that the base station configures the sending parameters corresponding to the first resource position as: information types being an earthquake and tsunami warning system, a commercial mobile alert service, a system message change indication, an indication for stopping wake-up signal detection, a coding manner being Manchester coding with a bit rate of 1/4, and a second indication being used to indicate to enable the frequency hopping, and a waveform generation manner being OOK; and configures the sending parameters corresponding to the second resource as: the information type being a wake-up indication for at least one terminal to be paged, a maximum load being 16 bits, and a waveform generation manner being the first OOK (i.e., an OOK that 2 bits of information are carried on a time domain symbol).

Assuming that terminal A needs to be awakened, assuming terminal A is 1001000111110000.

The base station sends the wake-up indication for terminal A on the second resource. Since the maximum load corresponding to the second resource is 16 bits, "1001000111110000" is sent on the second resource position after Manchester coding with a bit rate of 1/4 is performed. Since the frequency hopping is enabled and the coding manner is Manchester coding with a bit rate of 1/4, and a time domain symbol carries 2 bits of information, then K1=1, and the second indication is used to indicate to enable the frequency hopping, and a frequency hopping position are two preset frequency domain positions.

Terminal A monitors the LP-WUS on the first resource and second resource, and terminal A detects its own index in the second information, then terminal A monitors the paging message.

### Example B4

Taking the resource set being the above-mentioned resource set 2 as an example, it can be seen from the above contents that the resource set 2 includes a first resource position (time domain position 1). Assuming that the base station configures the sending parameters corresponding to the first resource position as: information types being an earthquake and tsunami warning system, a commercial mobile alert service, a system message change indication, an indication for stopping wake-up signal detection and a group wake-up indication, a coding manner being Manchester coding with a bit rate of 1/4, a waveform generation manner being OOK, and antenna configuration being antenna selection.

Assuming that all terminals with group index 3 need to be awakened.

Since the group wake-up indication information is sent in a bit mapping manner, that is, mapping is performed in a sequence of the earthquake and tsunami warning system, the commercial mobile alert service, the system message change indication, the indication for stopping wake-up signal detection and the group wake-up indication. Lengths of the earthquake and tsunami warning system, the commercial mobile alert service, the system message change indication, the indication for stopping wake-up signal detection are 1 bit. Assuming a total number of groups is 8, a length of the group index is 3 bits. Therefore, the base station encodes "000011" in Manchester coding with a bit rate of 1/4 and sends it on the first resource position. Multi antenna selection is used upon sending, that is, one of all configured antennas is selected for sending.

The terminal monitors the LP-WUS at each resource position according to the sending parameters, that is, monitors the earthquake and tsunami warning system, the commercial mobile alert service, the system message change indication, the indication for stopping wake-up signal detection and the group wake-up indication at time domain position 1, and assuming the group index corresponding to the terminal is 3, the terminal monitors a paging message.

As another example, taking the first set being a load set composed of load sizes corresponding to the wake-up signal as an example, the following examples C1 to C3 may be included.

### Example C1

Assuming the load set is the above-mentioned load set 1, it can be inferred from the above contents that load set 1 includes a first load and a second load. Assuming L1=1 and L2=4, the base station configures sending parameters corresponding to the first load as: the information type being an earthquake and tsunami warning system, a commercial mobile alert service, a system message change indication, a full wake-up indication, and an indication for stopping wake-up signal detection, a coding manner being RM with a code rate of 1/4, the time domain position being each monitoring window, and a waveform generation manner being OOK; and configures sending parameters corresponding to the second load as: the information type being a group wake-up indication, a first indication is used to indicate to add a 8-bit CRC, a time domain position being every n monitoring windows, and a waveform generation manner being OOK.

Assuming that a system message change indication with a size of 1 bit needs to be sent.

The base station sends the indication by using the sending parameters corresponding to the first load, that is, sending the indication within the nearest monitoring window. The indication is encoded with RM with a bit rate of 1/4, and a waveform generation manner for the indication is OOK.

The terminal determines to monitor the LP-WUS according to the sending parameters, that is, monitoring the first load within each monitoring window and monitoring the second load every n monitoring windows. RM with a code rate of 1/4 is used to monitor the first load, and CRC is used to monitor the second load. Therefore, if the terminal monitors the first load with a corresponding value of 1, the terminal may performs receiption for data.

### Example C2

Assuming that the load set is the above-mentioned load set 2, it can be seen from the above that the load set 2 includes the first load, the second load and a third load. Assuming that L1=1, L2=8, L3=48, the base station configures sending parameters corresponding to the first load as: a coding manner being Manchester coding with a bit rate of 1/4, a time domain position being time domain position 1, and a frequency domain position being frequency domain position 1; configures sending parameters corresponding to the second load as: the first indication being used to indicate to add a 8-bit CRC, a coding manner being Manchester coding with a bit rate of 1/2, a time domain position being time domain position 2, a frequency domain position being frequency domain position 1, and a waveform generation manner being OOK; and configures sending parameters corresponding to the third load as: the first indication being used to indicate to add a 8-bit CRC, a coding manner being Manchester coding with a bit rate of 1/2, a time domain position being time domain position 3, a frequency-domain position being frequency domain position 1, and a waveform generation manner being OOK.

Assuming that all terminals with group index 3 need to be awakened, and assuming that the information is sent in a bit mapping manner and a total number of groups is 8.

The base station sends information using the sending parameters corresponding to the second load, that is, "00100000" is added with CRC, and then the Manchester coding with a bit rate of 1/2 is performed, and finally it may be sent on the time domain position 2 and the frequency domain position 1.

The terminal determines to monitor the LP-WUS according to the sending parameters, and the LP-WUS is monitored by using the sending parameters corresponding to the second load. In a case where the group index corresponding to the terminal is 3, then the terminal receives the paging message.

### Example C3

Assuming that the load set is the above-mentioned load set 2, it can be seen from the above that the load set 2 includes the first load, the second load and a third load. Assuming that L1=1, L2=8, L3=20, the base station configures sending parameters corresponding to the first load as: a coding manner being Manchester coding with a bit rate of 1/4, a time domain position being time domain position 1, and a frequency domain position being frequency domain position 1, and a waveform generation manner being OOK; configures sending parameters corresponding to the second load as: a coding manner being Manchester coding with a bit rate of 1/2, a time domain position being time domain position 2, a frequency domain position being frequency domain position 1, and a waveform generation manner being OOK; and configures sending parameters corresponding to the third load as: the first indication being used to indicate to add a 8-bit CRC, a coding manner being Manchester coding with a bit rate of 1/2, a time domain position being time domain position 3, a frequency-domain position being frequency domain position 1, and a waveform generation manner being OOK.

Assuming that terminal A and terminal B need to be awakened, the corresponding terminal index is 8 bits, and assuming that terminal A is 10010001 and terminal B is 11110000.

The base station performs transmission by using the sending parameters corresponding to the third load. Since a bit overhead corresponding to the third load is 20, four zeros are added after the indexes of terminal A and terminal B are concatenated, that is, "10010001111100000000" is further added with CRC, and the Manchester coding with a bit rate of 1/2 is used, and fianlly it may be sent on the time domain position 3 and frequency domain position 1.

Terminal A and terminal B determine to monitor the LP-WUS according to the sending parameters. In a case where the LP-WUS is monitored using the sending parameters corresponding to the third load, and a corresponding terminal index is parsed, terminal A and terminal B receive the paging message.

As another example, taking the first set as a format set composed of corresponding forms upon sending the wake-up signal, the following examples D1 and D2 may be included.

### Example D1

Assume that the format set is composed of {format 1 and format 2}. In format 1, a first sending parameter is fixed. The first sending parameter being the Manchester coding with the code of 1/2, a waveform generation manner being OOK, and ae beam direction being direction 5 are taken as an example; format 2 is: Manchester with a code of 1/4, beam direction being direction 4, the first indication being used to indicate to add CRC, and a waveform generation manner being OOK; the base station configures the sending parameters corresponding to the format 1 as: information type being an earthquake and tsunami warning system, a commercial mobile alert service, a system message change indication, a full wake-up indication, an indication for stopping wake-up signal detection, a time domain position being each monitoring window, and frequency hopping being configured as disabled, a maximum load being 4 bits; configures the sending parameters corresponding to the second format as: the information type being a wake-up indication for at least one terminal to be paged, a time domain position being every n monitoring windows, and a maximum load being 16 bits.

Assuming that terminal A and terminal B need to be awakened, the corresponding terminal index is 8 bits, and assuming that terminal A is 10010001 and terminal B is 11110000.

The base station performs transmission by using the sending parameters corresponding to the format 2. Since the maximum load corresponding to format 2 is 16 bits, the indexes of terminal A and terminal B are concatenated. After CRC is added, the Manchester coding with a bit rate of 1/4 is performed for encoding, and then information is sent in the nearest transmissible monitoring window. The beam direction for sending is 4.

Terminal A and terminal B determine to monitor the LP-WUS according to the sending parameters. In a case where the LP-WUS is monitored using the sending parameters corresponding to the format 2, and a corresponding terminal index is parsed, terminal A and terminal B receive the paging message.

### Example D2

Assuming that the format set is composed of {format 1 and format 2}. In format 1, the first sending parameter is fixed, and the first sending parameter being the Manchester coding with a bit rate of 1/2, and a beam direction being {direction 1, direction 2} are taken as an example; format 2 is: Manchester coding with a bit rate of 1/4, a beam direction being {direction 1, direction 2, direction 3, direction 4}, and CRC being added; the base station configures the sending parameters corresponding to the format 1 as: information type being an earthquake and tsunami warning system, a commercial mobile alert service, a system message change indication, a full wake-up indication, an indication for stopping wake-up signal detection, a time domain position being each monitoring window, a waveform generation manner being OOK, frequency hopping being configured as disabled, and a maximum load being 4 bits; the base station configures the sending parameters corresponding to the second format as: the information type being a wake-up indication for at least one terminal to be paged, a time domain position being every n monitoring windows, and a maximum load being 16 bits.

Assuming that terminal A and terminal B need to be awakened, the corresponding terminal index is 8 bits, and assuming that terminal A is 10010001 and terminal B is 11110000.

The base station performs transmission by using the sending parameters corresponding to the format 2. Since the maximum load corresponding to format 2 is 16 bits, the indexes of terminal A and terminal B are concatenated. After CRC is added, the Manchester coding with a bit rate of 1/4 is performed for encoding, and then information is sent in the nearest transmissible monitoring window. The beam direction for sending is {direction 1, direction 2, direction 3, direction 4}.

Terminal A and terminal B determine to monitor the LP-WUS according to the sending parameters. In a case where the LP-WUS is monitored using the sending parameters corresponding to the format 2, and a corresponding terminal index is parsed, terminal A and terminal B receive the paging message.

The foregoing mainly introduces the solutions provided in the present disclosure from the perspective of interaction between various nodes. It can be understood that, in order to implement the above-mentioned functions, the various nodes (such as the base station or terminal) include corresponding hardware structures and/or software modules for performing the various functions. Those skilled in the art should easily realize that the present disclosure is able to be implemented in the form of hardware or a combination of hardware and computer software in combination with algorithms and steps described in the embodiments disclosed in the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

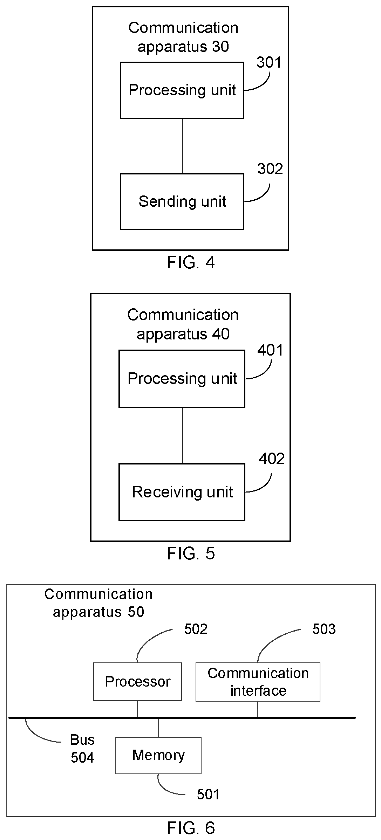

FIG. 4 shows a schematic diagram of composition of a communication apparatus according to the embodiments of the present disclosure. As shown in FIG. 4, the communication apparatus 30 includes a processing unit 301 and a sending unit 302.

The communication apparatus 30 may be the above-mentioned base station or a chip on the above-mentioned base station. In response to that the communication apparatus 30 is configured to implement the functions of the base station in the above-mentioned embodiments, various units, for example, are configured to implement the following functions.

A processing unit 301 is configured to configure a sending parameter.

A sending unit 302 is configured to send a wake-up signal based on the sending parameter.

In some embodiments, the processing unit 301, for example, is configured to configure the sending parameter based on a first set.

In some embodiments, the sending parameter includes at least one of:an information type, a time domain position, a frequency domain position, a coding configuration, a frequency hopping configuration, an interleaving configuration, a mapping configuration, a first indication, a maximum load, a number of repetition, a waveform generation manner, a beam configuration, or an antenna configuration; the first indication is used to indicate whether a cyclic redundancy check (CRC) is added to the wake-up signal; and the information type is used to indicate information carried by the wake-up signal.

In some embodiments, the information carried by the wake-up signal comprises at least one of: an earthquake and tsunami warning system, a commercial mobile alert service, a system message change indication, a full wake-up indication, an indication for stopping wake-up signal detection, a group wake-up indication, a wake-up indication for at least one terminal to be paged, a tracking reference signal transmission indication, or a cell index.

In some embodiments, the time domain position is used to indicate a time domain period and/or a time domain offset corresponding to the wake-up signal. A unit for the time domain period is one of the following: monitoring window, slot, second, millisecond; and the monitoring window is a duration during which the wake-up signal is capable of being sent.

In some embodiments, the frequency domain position is used to indicate a subcarrier and/or a frequency domain offset corresponding to the wake-up signal.

In some embodiments, the coding configuration is used to indicate a coding manner and/or a bit rate corresponding to the wake-up signal, the coding manner includes at least one of: Reed-Muller code, Polar code, repetition coding, Manchester coding, low-density parity check code, and the code rate is 1/Z, and Z is a positive integer greater than or equal to 1.

In some embodiments, the frequency hopping configuration is used to indicate a second indication and/or a frequency hopping mode corresponding to the wake-up signal. The second indication is used to indicate whether frequency hopping corresponding to the wake-up signal is enabled. The frequency hopping mode includes a frequency hopping granularity and a frequency hopping position, the frequency hopping granularity includes K1 symbols, K1 is a positive integer greater than or equal to 1, and the frequency hopping position includes K2 frequency domain positions, K2 is a positive integer greater than or equal to 2.

In some embodiments, the interleaving configuration is used to indicate a third indication and/or an interleaving mode corresponding to the wake-up signal, the third indication is used to indicate whether interleaving corresponding to the wake-up signal is enabled, and the interleaving mode is a predefined mode.

In some embodiments, the mapping configuration is used to indicate a mapping mode corresponding to the wake-up signal, and the mapping mode includes at least one of: a discontinuous frequency domain mapping, or a continuous frequency domain mapping.

In some embodiments, the waveform generation manner comprises at least one of: amplitude shift keying, binary on-off keying, frequency shift keying, and orthogonal frequency division multiplexing.

In some embodiments, the beam configuration is used to indicate a beam direction corresponding to the wake-up signal.

In some embodiments, the antenna configuration is used to indicate a multi antenna transmission mode corresponding to the wake-up signal.

In some embodiments, in response to that the coding manner corresponding to the wake-up signal is Manchester coding with a bit rate being less than 1/2, frequency hopping corresponding to the wake-up signal is configured to be enabled.

In some embodiments, in response to that the coding manner corresponding to the wake-up signal is Manchester coding with a bit rate of 1/2, and a number of information bits carried on a time domain symbol is 2 upon sending, a value of K1 is configured as 1.

In some embodiments, in response to that a preset condition is met, K1 is configured to be a value obtained from 2 multiplying an information load to be sent and divided by a number of information bits carried on a time domain symbol upon sending, and the preset condition is any one of the following: the coding manner corresponding to the wake-up signal being Manchester coding with a bit rate of 1/2 and repetition coding; the coding manner corresponding to the wake-up signal being Manchester coding with a bit rate of 1/2 and the number of repetition being greater than 1.

In some embodiments, the first set is at least one of: an information set composed of pieces of information carried by the wake-up signal, a resource set composed of resource positions corresponding to the wake-up signal upon sending, a load set composed of load sizes corresponding to the wake-up signal, and a format set composed of formats corresponding to the wake-up signal upon sending.

In some embodiments, in response to that the first set includes the information set, the first set includes first information and second information; the first information includes at least one of: an earthquake and tsunami warning system, a commercial mobile alert service, a system message change indication, a full wake-up indication, an indication for stopping wake-up signal detection, a tracking reference signal transmission indication, or a cell index; the second information includes at least one of: a group wake-up indication, or a wake-up indication for at least one terminal to be paged. Alternatively, the first set includes the first information, the second information, and third information; the first information includes at least one of: the earthquake and tsunami warning system, the commercial mobile alert service, the system message change indication, or the cell index; the second information includes at least one of: the indication for stopping wake-up signal detection, the tracking reference signal transmission indication; and the third information includes at least one of: the group wake-up indication, or the wake-up indication for at least one terminal to be paged. Alternatively, the first information includes at least one of: an earthquake and tsunami warning system, a commercial mobile alert service, a system message change indication, a full wake-up indication, an indication for stopping wake-up signal detection, a tracking reference signal transmission indication, or a cell index; the second information includes the group wake-up indication; and the third information includes the wake-up indication for at least one terminal to be paged. Alternatively, the first set includes the first information, the second information, the third information, and fourth information; the first information includes at least one of: the earthquake and tsunami warning system, the system message change indication, the commercial mobile alert service, or the cell index; the second information includes at least one of: the full wake-up indication, the indication for stopping wake-up signal detection, or the tracking reference signal transmission indication; the third information includes the group wake-up indication; and the fourth information includes the wake-up indication for at least one terminal to be paged.

In some embodiments, in response to that the first set includes the resource set, the first set includes F preset resource positions, where F is a positive integer greater than or equal to 1.

In some embodiments, in response to that the first set includes the load set, the first set includes a first load and a second load; where the first load is a load less than or equal to L1, and the second load is a load greater than L1 and less than or equal to L2. Alternatively, the first set includes the first load, the second load, and a third load; where the first load is a load less than or equal to L1, the second load is a load greater than L1 and less than or equal to L2, and the third load is a load greater than L2 and less than or equal to L3; L1, L2, and L3 are all positive integers greater than or equal to 1, and L1 is less than L2 and L2 is less than L3.

In some embodiments, in response to that the first set includes the format set, the first set is composed of G sending formats; where first sending parameters corresponding to respective sending formats are preset and/or fixed, and G is a positive integer greater than or equal to 1.

FIG. 5 shows a schematic diagram of another composition of a communication apparatus according to the embodiments of the present disclosure. As shown in FIG. 5, the communication apparatus 40 includes a processing unit 401 and a receiving unit 402.

The communication apparatus 40 may be the above-mentioned terminal of a chip in the terminal. In response to that the communication apparatus 40 is configured to implement the functions of the terminal in the above-mentioned embodiments, various units, for example, are configured to implement the following functions.

A processing unit 401 is configured to acquire a sending parameter.

A receiving unit 402 is configured to receive a wake-up signal based on the sending parameter.

In some embodiments, the sending parameter includes at least one of:an information type, a time domain position, a frequency domain position, a coding configuration, a frequency hopping configuration, an interleaving configuration, a mapping configuration, a first indication, a maximum load, a number of repetition, a waveform generation manner, a beam configuration, or an antenna configuration; the first indication is used to indicate whether a CRC is added to the wake-up signal; and the information type is used to indicate information carried by the wake-up signal.

In some embodiments, the processing unit 401, for example, is configured for at least one of: acquiring a sending parameter corresponding to one or more pieces of information in an information set composed of pieces of information carried by the wake-up signal; acquiring a sending parameter corresponding to one or more resources in a resource set composed of resource positions corresponding to the wake-up signal upon sending; acquiring a sending parameter corresponding to one or more loads in a load set composed of load sizes corresponding to the wake-up signal; or acquiring a sending parameter corresponding to one or more formats in a format set composed of formats corresponding to the wake-up signal transmission.

It should be noted that the units in FIG. 4 and FIG. 5 may also be referred to as modules. For example, a sending unit may be referred to as a sending module. In addition, in the embodiments shown in FIG. 4 and FIG. 5, the names of the various units may not be the names shown in the figures. For example, the sending unit may also be referred to as a communication unit, and the receiving unit may also be referred to as a communication unit.

If the various units in FIG. 4 and FIG. 5 are implemented in the form of the software functional unit and sold or used as independent products, they may be stored in a computer-readable storage medium. Based on this understanding, the technical solutions of the present disclosure may be essentially, or a part of the technical solutions of the present disclosure that contributes to the related technologies, or all or a portion of the technical solutions of the present disclosure may be, embodied in the form of a software product, and the computer software product may be stored in a storage medium including couples of instructions to enable a computer device (may be a personal computer, a server, a network device, etc.) or a processor to perform all or a portion of steps of the method in the various embodiments of the present disclosure. The storage medium for storing a computer software product includes various types of media capable of storing program codes, such as a USB flash drive, a mobile disk, a read-only memory (ROM), a Random-access memory (RAM), a magnetic disk, or an optical disk.

In a case where the communication apparatus 30 or the communication apparatus 40 implements the functions of the above-mentioned integrated modules by adopting the form of hardware, there is provided a structural schematic diagram of a communication apparatus in the embodiments of the present disclosure. As shown in FIG. 6, the communication apparatus 50 includes: a processor 502, a communication interface 503, and a bus 504. In some embodiments, the communication apparatus 50 further includes a memory 501.

The processor 502 may implement or perform various exemplary logical blocks, modules and circuits described in combination with contents of the present disclosure. The processor 502 may be a central processor, a general-purpose processor, a digital signal processor, an application specific integrated circuit, a field programmable gate array, or other programmable logic component, a transistor logic component, a hardware assembly, or any combination thereof. The processor 502 may implement or execute various illustrative logical blocks, modules and circuits described in conjunction with the disclosed contents the present disclosure. The processor 502 may also be a combination that implements computing functions, for example, the processor 502 includes a combination of one or more microprocessors, a combination of a DSP (digital signal processor) and a microprocessor, or the like.

The communication interface 503 is configured to connect to other devices through a communication network. The communication network may be the Ethernet, a radio access network, a wireless local area networks (WLAN), or the like.

The memory 501 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage medium or any other magnetic storage devices, or any other medium that can be used to carry or store desired program codes with instructions or data and can be accessed by a computer, which is not limited thereto.

As a possible implementation, the memory 501 may exist independently from the processor 502, and the memory 501 may be connected to the processor 502 through the bus 504, and is configured to store instructions or program codes. In a case where the processor 502 invokes and executes instructions or program codes stored in the memory 501, the signal sending method or signal receiving method provided in the embodiments of the present disclosure may be implemented.

In another implementation, the memory 501 may be integrated with the processor 502.

The bus 504 may be an extended industry standard architecture (EISA) bus, or the like. The bus 504 may be classified as an address bus, a data bus, or a control bus, or the like. For ease of representation, only one bold line is used in FIG. 6 for representing the bus 504, but it does not mean that there is only one bus or one type of bus.

Through the description of the above implementations, those of ordinary skill in the art may clearly understand that for the convenience and simplicity of the description, the division of the above functional modules is given merely as an example. In practical applications, the above functions can be allocated to different functional modules according to requirements, that is, the internal structure of the base station or terminal may be divided into different functional modules to complete all or part of the functions described above.

A computer-readable storage medium (for example, a non-transitory computer-readable storage medium) is provided in the embodiments of the present disclosure. All or part of the processes in the above method embodiments may be implemented by related information of an information hardware indicated by computer instructions. The programs may be stored in the above-mentioned computer-readable storage medium, and upon being executed, the programs may include the processes as described in the above method embodiments. The computer-readable storage medium may be an internal storage in any of the aforementioned embodiments. The above-mentioned computer-readable storage medium may also be an external storage device of the above-mentioned base station or terminal, such as a plug-in hard disk, a smart media card (SMC), a secure digital (SD) card, a flash card, etc., equipped on the above-mentioned base station or terminal. Furthermore, the above-mentioned computer-readable storage medium may include both an internal storage unit and an external storage device of the above-mentioned base station or terminal. The above-mentioned computer-readable storage medium is configured to store the above-mentioned computer programs and other programs and data required by the above-mentioned base station or terminal. The above-mentioned computer-readable storage medium may further be configured to temporarily store data that has been output or is to be output.

A computer program product is further provided in the embodiments of the present disclosure. The computer program product includes computer programs that, when run on a computer, enable the computer to execute any one of the signal sending method or signal receiving method provided in the above-mentioned embodiments.

In the technical solutions of the present disclosure, the wake-up signal is sent based on the sending parameter, thus the power consumption of the terminal can be reduced.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, wordings "comprise/comprises/comprising" do not exclude other components or steps, and wordings "a/an" and "one" do not exclude a case of a number of a plurality. A single processor or other units may implement couples of functions listed in the claims. Some measures are recorded in different dependent claims, but it does not mean that these measures cannot be combined to produce good effects.

Although the present disclosure is described in conjunction with specific features and embodiments thereof, obviously, various modifications and combinations may be made thereto without departing from the spirit and scope of the present disclosure. Accordingly, the specification and accompanying drawings herein are merely exemplary illustration of the present disclosure defined by the claims and are deemed to cover any and all modifications, variations, combinations or equivalents within the scope of the present disclosure. Obviously, those skilled in the art can make various modifications and variations to the present disclosure without departing from the spirit and scope of the present disclosure. In this way, if these modifications and variations in the present disclosure fall within the scope of the claims and their equivalent technologies of the present disclosure, then the present disclosure is also intended to include these modifications and variations.

The foregoing descriptions are merely specific implementations of the present disclosure, but the protection scope of the present disclosure is not limited thereto. Any variations or replacements within the technical scope disclosed in the present disclosure shall fall within the protection scope of the present disclosure. Therefore, the protection scope of the present disclosure should be subject to the protection scope of the claims.

## Claims

1. A signal sending method, **characterized by** comprising:
configuring a sending parameter; and
sending a wake-up signal based on the sending parameter.

2. The method according to claim 1, wherein configuring the sending parameter comprises:
configuring the sending parameter based on a first set.

3. The method according to claim 1, wherein the sending parameter comprises at least one of:
an information type, a time domain position, a frequency domain position, a coding configuration, a frequency hopping configuration, an interleaving configuration, a mapping configuration, a first indication, a maximum load, a number of repetition, a waveform generation manner, a beam configuration, or an antenna configuration; wherein the first indication is used to indicate whether a cyclic redundancy check (CRC) is added to the wake-up signal; and the information type is used to indicate information carried by the wake-up signal.

4. The method according to claim 3, wherein the information carried by the wake-up signal comprises at least one of:
an earthquake and tsunami warning system, a commercial mobile alert service, a system message change indication, a full wake-up indication, an indication for stopping wake-up signal detection, a group wake-up indication, a wake-up indication for at least one terminal to be paged, a tracking reference signal transmission indication, or a cell index.

5. The method according to claim 3, wherein the time domain position is used to indicate a time domain period and/or a time domain offset corresponding to the wake-up signal, wherein a unit for the time domain period is one of the following: monitoring window, slot, second, millisecond; wherein the monitoring window is a duration during which the wake-up signal is capable of being sent.

6. The method according to claim 3, wherein the frequency domain position is used to indicate a subcarrier and/or a frequency domain offset corresponding to the wake-up signal.

7. The method according to claim 3, wherein the coding configuration is used to indicate a coding manner and/or a bit rate corresponding to the wake-up signal, the coding manner comprises at least one of: Reed-Muller code, Polar code, repetition coding, Manchester coding, low-density parity check code, and the code rate is 1/Z, Z is a positive integer greater than or equal to 1.

8. The method according to claim 3, wherein the frequency hopping configuration is used to indicate a second indication and/or a frequency hopping mode corresponding to the wake-up signal, and the second indication is used to indicate whether frequency hopping corresponding to the wake-up signal is enabled; and
the frequency hopping mode comprises a frequency hopping granularity and a frequency hopping position, the frequency hopping granularity includes K1 symbols, K1 is a positive integer greater than or equal to 1, and the frequency hopping position includes K2 frequency domain positions, K2 is a positive integer greater than or equal to 2.

9. The method according to claim 3, wherein the interleaving configuration is used to indicate a third indication and/or an interleaving mode corresponding to the wake-up signal, the third indication is used to indicate whether interleaving corresponding to the wake-up signal is enabled, and the interleaving mode is a predefined mode.

10. The method according to claim 3, wherein the mapping configuration is used to indicate a mapping mode corresponding to the wake-up signal, and the mapping mode comprises at least one of: a discontinuous frequency domain mapping, or a continuous frequency domain mapping.

11. The method according to claim 3, wherein the waveform generation manner comprises at least one of: amplitude shift keying, binary on-off keying, frequency shift keying, and orthogonal frequency division multiplexing.

12. The method according to claim 3, wherein the beam configuration is used to indicate a beam direction corresponding to the wake-up signal.

13. The method according to claim 3, wherein the antenna configuration is used to indicate a multi antenna transmission mode corresponding to the wake-up signal.

14. The method according to claim 8, wherein in response to that the coding manner corresponding to the wake-up signal is Manchester coding with a bit rate being less than 1/2, frequency hopping corresponding to the wake-up signal is configured to be enabled.

15. The method according to claim 8, wherein in response to that the coding manner corresponding to the wake-up signal is Manchester coding with a bit rate of 1/2, and a number of information bits carried on a time domain symbol is 2 upon sending, a value of K1 is configured as 1.

16. The method according to claim 8, wherein in response to that a preset condition is met, K1 is configured to be a value obtained from 2 multiplying an information load to be sent and divided by a number of information bits carried on a time domain symbol upon sending, and the preset condition is any one of the following:
the coding manner corresponding to the wake-up signal being Manchester coding with a bit rate of 1/2 and repetition coding;
the coding manner corresponding to the wake-up signal being Manchester coding with a bit rate of 1/2 and the number of repetition being greater than 1.

17. The method according to claim 2, wherein the first set is at least one of:
an information set composed of pieces of information carried by the wake-up signal, a resource set composed of resource positions corresponding to the wake-up signal upon sending, a load set composed of load sizes corresponding to the wake-up signal, and a format set composed of formats corresponding to the wake-up signal upon sending.

18. The method according to claim 17, wherein in response to that the first set comprises the information set, the first set comprises first information and second information;
wherein the first information includes at least one of:
an earthquake and tsunami warning system, a commercial mobile alert service, a system message change indication, a full wake-up indication, an indication for stopping wake-up signal detection, a tracking reference signal transmission indication, or a cell index;
the second information includes at least one of: a group wake-up indication, or a wake-up indication for at least one terminal to be paged; or
the first set comprises the first information, the second information, and third information; wherein
the first information includes at least one of: the earthquake and tsunami warning system, the commercial mobile alert service, the system message change indication, or the cell index;
the second information includes at least one of: the indication for stopping wake-up signal detection, the tracking reference signal transmission indication; and
the third information includes at least one of: the group wake-up indication, or the wake-up indication for at least one terminal to be paged; or
the first information includes at least one of: the earthquake and tsunami warning system, the commercial mobile alert service, the system message change indication, the full wake-up indication, the indication for stopping wake-up signal detection, the tracking reference signal transmission indication, or the cell index;
the second information includes the group wake-up indication; and
the third information includes the wake-up indication for at least one terminal to be paged; or
the first set includes the first information, the second information, the third information, and fourth information;
wherein the first information includes at least one of: the earthquake and tsunami warning system, the system message change indication, the commercial mobile alert service, or the cell index;
the second information includes at least one of: the full wake-up indication, the indication for stopping wake-up signal detection, or the tracking reference signal transmission indication;
the third information includes the group wake-up indication; and
the fourth information includes the wake-up indication for at least one terminal to be paged.

19. The method according to claim 17, wherein in response to that the first set comprises the resource set, the first set comprises F preset resource positions, wherein F is a positive integer greater than or equal to 1.

20. The method according to claim 17, wherein in response to that the first set comprises the load set, the first set comprises a first load and a second load; wherein the first load is a load less than or equal to L1, and the second load is a load greater than L1 and less than or equal to L2; or
the first set comprises the first load, the second load, and a third load; wherein the first load is a load less than or equal to L1, the second load is a load greater than L1 and less than or equal to L2, and the third load is a load greater than L2 and less than or equal to L3; L1, L2, and L3 are all positive integers greater than or equal to 1, and L1 is less than L2 and L2 is less than L3.

21. The method according to claim 17, wherein in response to that the first set comprises the format set, the first set is composed of G sending formats; wherein first sending parameters corresponding to respective sending formats are preset and/or fixed, and G is a positive integer greater than or equal to 1.

22. A signal receiving method, **characterized by** comprising:
acquiring a sending parameter; and
receiving a wake-up signal based on the sending parameter.

23. The method according to claim 22, wherein the sending parameter comprises at least one of:
an information type, a time domain position, a frequency domain position, a coding configuration, a frequency hopping configuration, an interleaving configuration, a mapping configuration, a first indication, a maximum load, a number of repetition, a waveform generation manner, a beam configuration, or an antenna configuration; wherein the first indication is used to indicate whether a CRC is added to the wake-up signal; and the information type is used to indicate information carried by the wake-up signal.

24. The method according to claim 22, wherein acquiring the sending parameter comprises at least one of:
acquiring a sending parameter corresponding to one or more pieces of information in an information set composed of pieces of information carried by the wake-up signal;
acquiring a sending parameter corresponding to one or more resources in a resource set composed of resource positions corresponding to the wake-up signal upon sending;
acquiring a sending parameter corresponding to one or more loads in a load set composed of load sizes corresponding to the wake-up signal; or
acquiring a sending parameter corresponding to one or more formats in a format set composed of formats corresponding to the wake-up signal transmission.

25. A communication apparatus, comprising: a processor and a memory; wherein
the memory stores instructions that are executable for the processor;
wherein in response to that the processor is configured to execute the instructions, the communication apparatus is enabled to perform the method according to any one of claims 1 to 24.

26. A computer-readable storage medium, wherein the computer-readable storage medium comprises computer instructions that, upon being run on a computer, enable the computer to execute the method according to any one of claims 1 to 24.
